# EUROPÄISCHE PATENTSCHRIFT

(11) **EP 3 817 943 B1**
(45) Veröffentlichungstag und Bekanntmachung des Hinweises auf die Patenterteilung: **29.03.2023**
(21) Anmeldenummer: 19778843.3
(22) Anmeldetag: 16.09.2019
(51) Int. Cl.: B60L 5/00

(54) **STROMABNEHMER UND NICHT SPURGEBUNDENES, ELEKTRISCH ANGETRIEBENES FAHRZEUG MIT EINEM SOLCHEN STROMABNEHMER**
CURRENT COLLECTOR AND NON-TRACK-BOUND, ELECTRICALLY DRIVEN VEHICLE WITH A CURRENT COLLECTOR OF THIS KIND
COLLECTEUR DE COURANT ET VÉHICULE NON GUIDÉ, À ENTRAÎNEMENT ÉLECTRIQUE, DOTÉ D'UN COLLECTEUR DE COURANT DE CE TYPE

(30) Priorität: 18.09.2018 DE 102018215816
(43) Veröffentlichungstag der Anmeldung: 12.05.2021
(73) Patentinhaber: Siemens Mobility GmbH, 81739 München (DE)
(72) Erfinder: FRANCKE, Jürgen, 12524 Berlin (DE); NELKEL, Matthias, 10823 Berlin (DE)
(74) Vertreter: Siemens Patent Attorneys
(86) Internationale Anmeldenummer: PCT/EP2019/074621
(87) Internationale Veröffentlichungsnummer: WO 2020/058153

(56) Entgegenhaltungen:
- DE-A1-102012 213 460
- DE-A1-102017 203 046
- DE-T2- 69 333 244

## Beschreibung

Die Erfindung betrifft einen Stromabnehmer für ein nicht spurgebundenes, elektrisch angetriebenes Fahrzeug nach dem Oberbegriff des Patentanspruches 1. Zudem betrifft die Erfindung ein Fahrzeug mit einem solchen Stromabnehmer.

Aus der DE 693 33 244 T2 ist eine Stromabnehmervorrichtung für Fahrzeuge, wie Oberleitungsomnibusse oder Straßenbahnen, bekannt. Sie umfasst eine Basis zur Montage am Fahrzeug und eine Stromabnehmerstange, welche ein erstes und ein zweites Ende aufweist. Das erste Ende ist an der Basis insbesondere um eine ungefähr horizontale Kippachse zum Kippen in einem Bereich bestimmter Ausrichtungen drehbar angebracht. Das zweite Ende trägt einen Stromabnehmerkopf. Ferner umfasst die Stromabnehmervorrichtung Anhebemittel zur Aufbringung eines Anhebemoments auf die Stromabnehmerstange um die Kippachse, derart, dass der Stromabnehmerkopf nach oben gegen eine Fahrleitung mit einer Kraft angelegt wird, deren Wert in einem bestimmten Wertebereich eintritt. Schließlich umfasst sie Mittel zur Regelung der Kraft in Abhängigkeit von der Neigung der Stromabnehmerstange derart, dass sie im Wesentlichen auf einem bestimmten Wert gehalten wird.

Die Offenlegungsschrift DE 10 2012 213 460 A1 betrifft ein nicht schienengebundenes Fahrzeug, insbesondere Lastkraftwagen oder Bus, mit einem Stromabnehmer zur Einspeisung elektrischer Energie aus einer zweipoligen Oberleitung, deren als Hin- und Rückleiter ausgebildete Fahrdrähte jeweils durch mindestens eine Schleifleiste des Stromabnehmers kontaktierbar sind. Der Stromabnehmer weist ein gelenkiges Traggestänge auf, welches sich fahrzeugseitig auf eine Stellplattform abstützt und fahrdrahtseitig eine die Schleifleisten tragende Wippenanordnung trägt. Dabei ist die Stellplattform zur Ausführung einer quer zu einer Fahrzeuglängsachse gerichteten Stellbewegung des Stromabnehmers relativ zum Fahrzeug mittels einer Stelleinrichtung bewegbar.

Ein solches Fahrzeug mit einem Stromabnehmer für ein zweipoliges Fahrleitungssystem ist aus der Offenlegungsschrift DE 10 2017 203 046 A1 bekannt. Der Stromabnehmer weist einen Unterarm auf, der auf einer Basis schwenkbar montiert ist. Ferner weist er zwei an einem der Basis entgegengesetzten Ende des Unterarms relativ zueinander schwenkbar montierte Oberarme auf. Zwei separate, unterschiedlichen Polen einer Fahrleitung zugeordnete Kontaktbaugruppen sind an den jeweiligen Oberarmen angeordnet. Der Stromabnehmer weist eine an der Basis angeordnete, zentrale Ausgleichswippe sowie zwei Zugstangen auf, deren erstes Ende jeweils schwenkbar mit der Ausgleichswippe und deren zweites Ende jeweils mit einem der zwei Oberarme schwenkbar verbunden ist. Die zentrale Ausgleichswippe ist als Kreuzlager ausgebildet, das sich auf der Basis abstützt. Zur Begrenzung einer Höhendifferenz der Kontaktbaugruppen ist eine Querstange vorgesehen, die an einem Oberarm befestigt ist und in eine Bohrung im anderen Oberarm hineinragt, deren Durchmesser deutlich größer ist als der Durchmesser der Querstange.

Durch die bekannte Querstange ist der Verdrehwinkel zwischen den Oberarmen begrenzt, indem diese gegen die Innenwand der Bohrung anschlägt. Die Begrenzung des Verdrehwinkels ist jedoch für alle Anstellwinkel der Oberarme konstant, was zu einer variablen Begrenzung der Höhendifferenz der Kontaktbaugruppen führt. Mit zunehmender Höhenposition der Kontaktbaugruppen bewirkt eine konstante Verdrehwinkelbegrenzung eine abnehmende Höhendifferenzbegrenzung.

Der Erfindung liegt daher die Aufgabe zugrunde, eine vorteilhafte Alternative zu dem bekannten Stromabnehmer bereitzustellen.

Die Aufgabe wird gelöst durch einen Stromabnehmer der eingangs genannten Art mit den im kennzeichnenden Teil des Patentanspruches 1 angegebenen Merkmalen.

Demnach umfasst ein Stromabnehmer für ein nicht spurgebundenes, elektrisch angetriebenes Fahrzeug zur Einspeisung elektrischer Energie aus einer zweipoligen Oberleitungsanlage mit zwei Fahrdrähten einen anstellbaren Unterarm, der über ein Basisgelenk drehbar mit dem Fahrzeug verbindbar ist. Das Anstellen erfolgt beispielsweise über einen als Luftfederbalg ausgebildeten Hubantrieb. Der Stromabnehmer umfasst zwei Oberarme, die über je ein Kniegelenk mit dem Unterarm drehbar verbunden sind. Am freien, fahrdrahtseitigen Ende tragen die Oberarme je eine Kontaktwippe mit Schleifleisten zur Kontaktierung je eines der Fahrdrähte. Zwei Koppelstangen sind über je ein Koppelgelenk drehbar mit je einem der Oberarme verbunden und derart angelenkt, dass ein Anstellen des Unterarms ein gegensinniges Anstellen der Oberarme erzwingt. Der Stromabnehmer umfasst ferner eine Ausgleichswippe zum Ausgleichen einer Höhendifferenz zwischen den Kontaktwippen, die einen Wippenständer und einen über ein Wippengelenk drehbar mit diesem verbundenen Wippenbalken aufweist. Der Wippenständer ist über ein Grundgelenk drehbar mit dem Fahrzeug verbindbar, während der Wippenbalken über beiderseits des Wippengelenks angeordnete Ausgleichsgelenke jeweils drehbar mit den Koppelstangen verbunden ist. Erfindungsgemäß ist wenigstens ein mit dem Fahrzeug verbindbares Anschlagelement für ein an einer Seite des Wippenbalkens angeordnetes Tastelement vorgesehen, welches eine Drehbewegung des Wippenbalkens um eine Wippengelenksachse des Wippengelenks begrenzt, wobei ein Tastelement beim Anstellen des Unterarms eine kreisbogenförmige Bahn abtastet, und wobei das Anschlagelement eine bogenförmige Anschlagbahn für das Tastelement aufweist. Das Anschlagelement kann auf nur einer Seite des Wippenbalkens angeordnet sein und dort die Wippenbewegung nur in ein Drehrichtung oder auch in die Gegenrichtung begrenzen. Über die Form des Anschlagelements kann ein Radialabstand zwischen dem anschlagenden Teil des Wippenbalkens und dem Anschlagelement vorgegeben werden. Insbesondere kann der Radialabstand in Abhängigkeit vom Anstellwinkel des Unterarms variieren. Hierdurch wird eine kontinuierliche Begrenzung der Höhendifferenz zwischen den Kontaktwippen bei jedem Anstellwinkel des Unterarms ermöglicht. Durch den Verlauf des Bogens wird der Verlauf der Höhendifferenzbegrenzung vorgegeben. Sind die Tastelemente bezüglich des Grundgelenks auf derselben Seite wie die Wippenachse angeordnet, ist die bogenförmige Anschlagbahn konvex ausgebildet, im anderen Fall konkav.

In einer vorteilhaften Ausführungsart des erfindungsgemäßen Stromabnehmers ist jedoch für beide Seiten des Wippenbalkens je ein Anschlagelement vorgesehen. Hierbei genügt es, auf jeder Seite nur eine Drehrichtung des Wippenbalkens zu begrenzen, indem die Anschlagkräfte über die Anschlagelemente in das Fahrzeug eingeleitet werden.

In einer vorteilhaften Ausführungsart des erfindungsgemäßen Stromabnehmers ist auf beiden Seiten des Wippenbalkens je ein Tastelement angeordnet, welches bei Berührung des zugeordneten Anschlagelements die Drehbewegung des Wippenbalkens im bzw. gegen den Uhrzeigersinn begrenzt. Durch Anordnung und Formgebung des Tastelements werden definierte Anschlagbedingungen geschaffen. Das Tastelement kann bei Verschleiß ausgetauscht werden, ohne die komplette Ausgleichswippe ersetzen zu müssen.

In einer vorteilhaften Ausführungsart des erfindungsgemäßen Stromabnehmers ist die Anschlagbahn wenigstens abschnittsweise kreisförmig ausgebildet, so dass in Neutralstellung des Wippenbalkens ein Radialabstand des Tastelements zur Anschlagbahn in einem zugeordneten Anstellwinkelabschnitt des Unterarms konstant ist. Bei Anstellwinkeln im oberen Arbeitsbereich der Kontaktwippen kann hierdurch eine konstante maximale Höhendifferenz zwischen den Kontaktwippen eingehalten werden.

In einer vorteilhaften Ausführungsart des erfindungsgemäßen Stromabnehmers ist die Anschlagbahn wenigstens abschnittsweise spiralförmig ausgebildet, dass in Neutralstellung des Wippenbalkens der Radialabstand des Tastelements zur Anschlagbahn in einem zugeordneten Anstellwinkelabschnitt des Unterarms in Abhängigkeit des Anstellwinkels variiert. Bei Anstellwinkeln unterhalb des Kontaktbereichs der Kontaktwippen kann etwa mit abnehmendem Anstellwinkel ein sich verkleinernder Radialabstand eingestellt werden, so dass die mögliche Höhendifferenz beim Absenken der Kontaktwippen abnimmt. Dies vergleichmäßigt die Stromabnehmerbewegung beim Absenken des Stromabnehmers in die Parkposition.

In einer vorteilhaften Ausführungsart des erfindungsgemäßen Stromabnehmers ist ein Tastelement als Tastrolle ausgebildet, die am Wippenbalken um dessen Balkenlängsachse drehbar gelagert ist. Hierdurch kann das Tastelement beim Anstellen oder Ablegen des Unterarms auf den Anschlagbahnen der Anschlagelemente abrollen, wenn es zu Berührungen zwischen einer Tastrolle und seinem Anschlagelement kommt, wodurch ein gleitreibungsbedingtes Abbremsen auf der Anschlagbahn verhindert und eine stetige Stromabnehmerbewegung gefördert wird.

Weitere Eigenschaften und Vorteile der Erfindung ergeben sich aus nachfolgender Beschreibung eines Ausführungsbeispiels anhand der Zeichnungen, in deren
- FIG 1: eine perspektivische Ansicht eines Stromabnehmers in angedrahtetem Zustand,
- FIG 2: ein Teilausschnitt einer Vorderansicht des Stromabnehmers aus FIG 1 mit Wippenbalken in Neutralstellung,
- FIG 3: ein Teilausschnitt einer Seitenansicht des Stromabnehmers aus FIG 1 mit Wippenbalken in Neutralstellung,
- FIG 4: ein Teilausschnitt einer Vorderansicht des Stromabnehmers aus FIG 1 mit Wippenbalken in Anschlagstellung und
- FIG 5: ein Teilausschnitt einer Seitenansicht des Stromabnehmers aus FIG 1 mit Wippenbalken in Anschlagstellung
schematisch veranschaulicht sind.

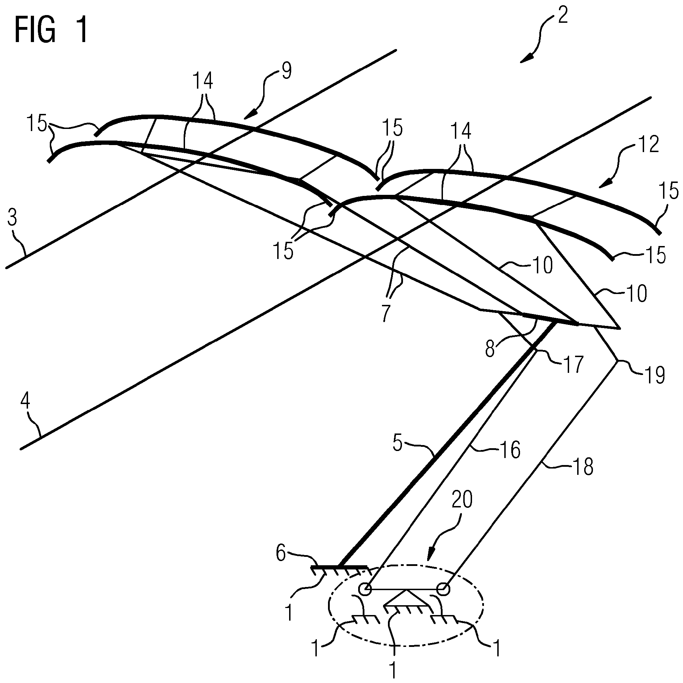

Gemäß FIG 1 umfasst ein nicht spurgebundenes, elektrisch angetriebenes Fahrzeug 1, beispielsweise ein Lastkraftwagen mit dieselelektrischem Antrieb, einen Stromabnehmer 2, über den auch während der Fahrt elektrische Energie aus einer Oberleitungsanlage einspeisbar ist. Die Oberleitungsanlage ist zweipolig ausgebildet und umfasst über einer Fahrspur gespannt einen als Hinleiter ausgebildeten ersten Fahrdraht 3 und einen als Rückleiter ausgebildeten, zweiten Fahrdraht 4 zur Bereitstellung elektrischer Energie. Der dargestellte Stromabnehmer 2 ist als Halbscherenpantograph ausgebildet und umfasst einen anstellbaren Unterarm 5, der über ein Basisgelenk 6 drehbar mit dem Fahrzeug 1 verbunden ist. Er umfasst ferner einen ersten Oberarm 7, der über ein erstes Kniegelenk 8 mit dem Unterarm 5 drehbar verbunden ist. Der erste Oberarm 7 trägt eine erste Kontaktwippe 9 zur Kontaktierung des ersten Fahrdrahts 3. Entsprechend umfasst der Stromabnehmer 2 einen zweiten Oberarm 10, der über ein zweites Kniegelenk 11 mit dem Unterarm 5 drehbar verbunden ist und eine zweite Kontaktwippe 12 zur Kontaktierung des zweiten Fahrdrahts 4 trägt. Im gezeigten Ausführungsbeispiel fluchten die Achsen des ersten Kniegelenks 8 und des zweiten Kniegelenks 11. Die erste Kontaktwippe 9 und die zweite Kontaktwippe 12 sind nebeneinander angeordnet und weisen jeweils zwei hintereinander angeordnete Schleifleisten 14 auf, an deren beide Enden sich nach unten gebogene Endhörner 15 anschließen. Das Anstellen des Unterarms 5 aus der Horizontalen erfolgt durch einen beispielsweise als Luftfederbalg ausgebildeten und nicht näher dargestellten Hubantrieb. Der Stromabnehmer 2 umfasst außerdem eine erste Koppelstange 16, die über ein erstes Koppelgelenk 17 drehbar mit dem ersten Oberarm 7 verbunden ist. Entsprechend ist eine zweite Koppelstange 18 über ein zweites Koppelgelenk 19 drehbar mit dem zweiten Oberarm 10 verbunden. Dabei sind die erste Koppelstange 16 und die zweite Koppelstange 18 derart angelenkt, dass ein Aufrichten des Unterarms 5 ein Aufrichten des ersten Oberarms 7 und des zweiten Oberarms 10 gegenüber der Horizontalen nach Art eines zweiarmigen Hebels erzwingt, wodurch die Kontaktwippen 9, 12 aus einer unteren Parkposition in eine obere Kontaktposition angehoben werden. In bestimmten Betriebssituationen des Fahrzeugs 1 kann es vorkommen, dass sich zwischen der ersten Kontaktwippe 9 und der zweiten Kontaktwippe 12 eine Höhendifferenz ihrer Höhenpositionen ergibt, beispielsweise bei seitlich geneigter Fahrbahn oder bei Kontaktierung der Oberleitung durch nur eine der beiden Kontaktwippen 9, 12. Zum Ausgleichen dieser Höhendifferenz umfasst der Stromabnehmer 2 eine Ausgleichswippe 20.

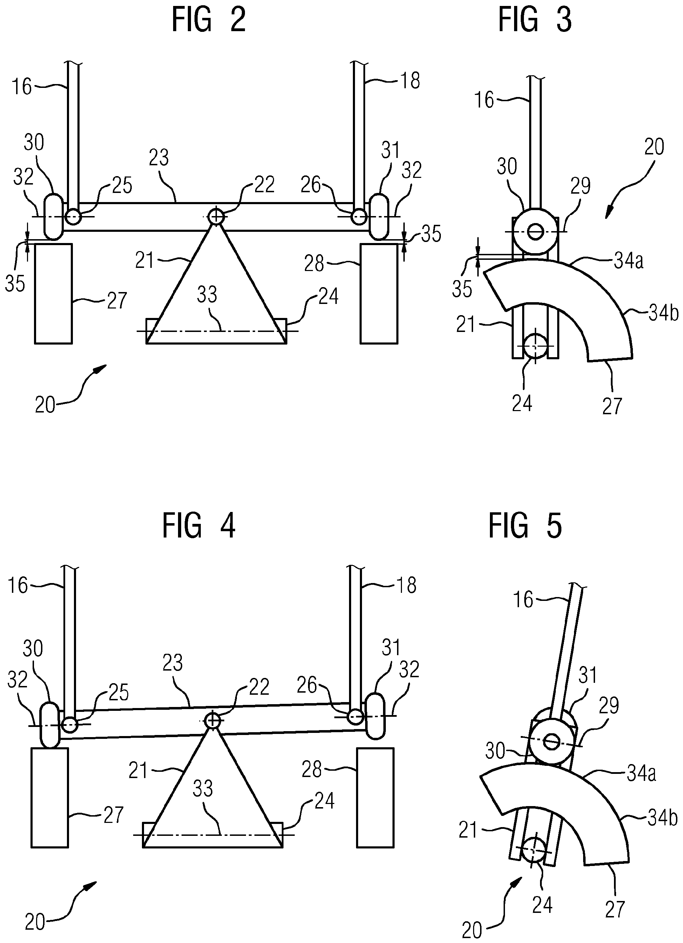

Gemäß FIG 2 bis FIG 5 weist die Ausgleichswippe 20 einen Wippenständer 21 und einen über ein Wippengelenk 22 drehbar mit diesem verbundenen Wippenbalken 23 auf. Der Wippenständer 21 ist über ein Grundgelenk 24 drehbar mit dem Fahrzeug 1 verbunden. Drehachsen des Grundgelenks 33, der Koppelgelenke 17, 19 und der Kniegelenke 8, 11 erstrecken sich parallel zur Drehachse des Basisgelenks 6. Der Wippenbalken 23 ist auf einer Seite des Wippengelenks 22 über ein erstes Ausgleichsgelenk 25 drehbar mit der ersten Koppelstange 16 und auf der anderen Seite des Wippengelenks 22 über ein zweites Ausgleichsgelenk 26 drehbar mit der zweiten Koppelstange 18 verbunden. Die Drehachsen des Wippengelenks 22 und der Ausgleichsgelenke 26, 26 erstrecken sich parallel zueinander und senkrecht zur Drehachse des Basisgelenks 6.

Zur Begrenzung einer Höhendifferenz zwischen den Kontaktwippen 9, 12 sind ein erstes Anschlagelement 27 und ein zweites Anschlagelement 28 vorgesehen, die mit dem Fahrzeug 1 verbunden sind und die Drehbewegung des Wippenbalkens 23 um eine Wippengelenksachse 29 des Wippengelenks 22 durch mechanischen Bewegungsanschlag begrenzen. Um definierte Anschlagsbedingungen zu gewährleisten, ist auf der einen Seite des Wippenbalkens 23 ein erstes Tastelement und auf dessen anderer Seite ein zweites Tastelement angeordnet, welche bei Berührung des ersten Anschlagelements 27 oder des zweiten Anschlagelements 28 eine Drehbewegung des Wippenbalkens 23 gegen den Uhrzeigersinn oder im Uhrzeigersinn begrenzen. Die Tastelemente sind als erste Tastrolle 30 und zweite Tastrolle 31 ausgebildet und an den gegenüber liegenden Enden des Wippenbalkens 23 um dessen Balkenlängsachse 32 drehbar gelagert. Beim Anstellen des Unterarms 5 bewegen sich die Tastrollen 30, 31 auf einer kreisbogenförmigen Bahn um die Grundgelenksachse 33 des Grundgelenks 24 und tasten dabei eine bogenförmige Anschlagbahn 34a, 34b der Anschlagelemente 27, 28 ab. Die Tastrollen 30, 31 sind bezüglich des Grundgelenks 33 auf derselben Seite wie das Wippengelenk 22 angeordnet, so dass die bogenförmige Anschlagbahn 34a, 34b konvex ausgebildet ist. Hierdurch kann die Höhendifferenz kontinuierlich bei jedem Anstellwinkel des Unterarms 5 begrenzt werden.

Die Anschlagbahn 34a ist in einem oberen Abschnitt der Anschlagelemente 27, 28, dem ein Anstellwinkelabschnitt des Unterarms 5 möglicher Kontaktpositionen der Kontaktwippen 9, 12 zugeordnet ist, jeweils kreisbogenförmig ausgebildet, so dass in Neutralstellung des Wippenbalkens 23 gemäß FIG 2 und FIG 3 ein Radialabstand 35 der Tastrollen 30, 31 zur Anschlagbahn 34a konstant ist. Innerhalb dieses Abschnitts ist die Höhendifferenz zwischen den Kontaktwippen 9, 12 auf einen konstanten Maximalwert eingestellt, der durch den Radialabstand 35 bestimmt ist. Tritt eine solche maximale Höhendifferenz auf, indem beispielsweise die erste Kontaktwippe 9 gegenüber der zweiten Kontaktwippe 12 maximal eingetaucht ist, so tritt eine maximale Relativverdrehung zwischen dem ersten Oberarm 7 und dem zweiten Oberarm 10 auf, was - über die Koppelstangen 16, 18 vermittelt - gemäß FIG 4 und FIG 5 mit einer maximalen Drehauslenkung des Wippenbalkens 23 gegen den Uhrzeigersinn einhergeht. Hierbei berührt die erste Tastrolle 30 das erste Anschlagelement 27, während die zweite Tastrolle 31 ihren maximalen Radialabstand 35 vom zweiten Anschlagelement 27 einnimmt.

Die Anschlagbahn 34b ist in einem unteren Abschnitt der Anschlagelemente 27, 28, dem ein Anstellwinkelabschnitt des Unterarms 5 unterhalb möglicher Kontaktpositionen der Kontaktwippen 9, 12 zugeordnet ist, jeweils spiralförmig ausgebildet, so dass in Neutralstellung des Wippenbalkens 23 der Radialabstand 35 der Tastrollen 30, 31 zur Anschlagbahn 34b in einem zugeordneten Anstellwinkelabschnitt des Unterarms () in Abhängigkeit des Anstellwinkels variiert, vorzugsweise in Richtung kleiner Anstellwinkel abnimmt. Die zulässige Höhendifferenz zwischen den Kontaktwippen 9, 12 nimmt auf diese Weise beim Fallen des Unterarms 5 ab, wodurch ein Absenken und Anheben des Stromabnehmers 2 unterhalb möglicher Kontakthöhen stetig erfolgt.

## Patentansprüche

1. Stromabnehmer (2) für ein nicht spurgebundenes, elektrisch angetriebenes Fahrzeug (1) zur Einspeisung elektrischer Energie aus einer zweipoligen Oberleitungsanlage mit zwei Fahrdrähten (3, 4), umfassend
- einen anstellbaren Unterarm (5), der über ein Basisgelenk (6) drehbar mit dem Fahrzeug (1) verbindbar ist,
- zwei Oberarme (7, 10), die über je ein Kniegelenk (8, 11) mit dem Unterarm (5) drehbar verbunden sind und je eine Kontaktwippe (9, 12) zur Kontaktierung je eines der Fahrdrähte (3, 4) tragen,
- zwei Koppelstangen (16, 18), die über je ein Koppelgelenk (17, 19) drehbar mit je einem der Oberarme (7, 10) verbunden und derart angelenkt sind, dass ein Anstellen des Unterarms (5) ein Anstellen der Oberarme (7, 10) erzwingt, und
- eine Ausgleichswippe (20) zum Ausgleichen einer Höhendifferenz zwischen den Kontaktwippen (9, 12), die einen Wippenständer (21) und einen über ein Wippengelenk (22) drehbar mit diesem verbundenen Wippenbalken (23) aufweist,
- wobei der Wippenständer (21) über ein Grundgelenk (24) drehbar mit dem Fahrzeug (1) verbindbar ist und der Wippenbalken (23) über beiderseits des Wippengelenks (22) angeordnete Ausgleichsgelenke (25, 26) jeweils drehbar mit den Koppelstangen (16, 18) verbunden ist,
**gekennzeichnet durch**
- wenigstens ein mit dem Fahrzeug (1) verbindbares Anschlagelement (27, 28) für ein an einer Seite des Wippenbalkens (23) angeordnetes Tastelement zur Begrenzung einer Drehbewegung des Wippenbalkens (23) um eine Wippengelenksachse (29) des Wippengelenks (22),
- wobei das Tastelement beim Anstellen des Unterarms (5) eine kreisbogenförmige Bahn abtastet, und
- wobei das Anschlagelement (27, 28) eine bogenförmige Anschlagbahn (34a, 34b) für das Tastelement aufweist.

2. Stromabnehmer (2) nach Anspruch 1, wobei für beide Seiten des Wippenbalkens (23) je ein Anschlagelement (27, 28) vorgesehen ist.

3. Stromabnehmer (2) nach einem der vorstehenden Ansprüche, wobei auf beiden Seiten des Wippenbalkens (23) je ein Tastelement angeordnet ist, welches bei Berührung des zugeordneten Anschlagelements (27, 28) die Drehbewegung des Wippenbalkens (23) im bzw. gegen den Uhrzeigersinn begrenzt.

4. Stromabnehmer (2) nach einem der vorstehenden Ansprüche, wobei die Anschlagbahn (34a) wenigstens abschnittsweise kreisförmig ausgebildet ist, so dass in Neutralstellung des Wippenbalkens (23) ein Radialabstand (35) des Tastelements zur Anschlagbahn (34a) in einem zugeordneten Anstellwinkelabschnitt des Unterarms (5) konstant ist.

5. Stromabnehmer (2) nach einem der vorstehenden Ansprüche, wobei die Anschlagbahn (34b) wenigstens abschnittsweise spiralförmig ausgebildet ist, so dass in Neutralstellung des Wippenbalkens (23) der Radialabstand (35) des Tastelements zur Anschlagbahn (34b) in einem zugeordneten Anstellwinkelabschnitt des Unterarms (5) in Abhängigkeit des Anstellwinkels variiert.

6. Stromabnehmer (2) nach einem der vorstehenden Ansprüche, wobei ein Tastelement als Tastrolle (30, 31) ausgebildet ist, die am Wippenbalken (2) um dessen Balkenlängsachse (32) drehbar gelagert ist.

7. Nicht spurgebundenes, elektrisch angetriebenes Fahrzeug (1) mit einem Stromabnehmer nach einem der vorstehenden Ansprüche.

## Claims

1. Current collector (2) for a non-track-bound, electrically driven vehicle (1) for feeding electrical energy from a twopole overhead line system with two contact wires (3, 4), comprising
- an adjustable lower arm (5), which can be connected to the vehicle (1) in a rotatable manner via a base joint (6),
- two upper arms (7, 10), which are connected to the lower arm (5) in a rotatable manner via a knee joint (8, 11) in each case and each carry a contact rocker (9, 12) for contacting one of the contact wires (3, 4) in each case,
- two coupling rods (16, 18), which are connected to one of the upper arms (7, 10) in a rotatable manner in each case via a coupling joint (17, 19) in each case and are hinged such that an adjustment of the lower arm (5) forces an adjustment of the upper arms (7, 10), and
- a compensating rocker (20) for compensating a height difference between the contact rockers (9, 12), which has a rocker stand (21) and a rocker bar (23) connected thereto in a rotatable manner via a rocker joint (22),
- wherein the rocker stand (21) can be connected to the vehicle (1) in a rotatable manner via a base joint (24) and the rocker bar (23) is connected to the coupling rods (16, 18) in a rotatable manner via compensating joints (25, 26) arranged on both sides of the rocker joint (22) in each case,
**characterised by**
- at least one end stop element (27, 28), which can be connected to the vehicle (1), for a sensing element arranged on one side of the rocker bar (23) for restricting a rotary movement of the rocker bar (23) about a rocker joint axis (29) of the rocker joint (22),
- wherein, when adjusting the lower arm (5), the sensing element senses a path in the shape of a circular arc, and
- wherein the end stop element (27, 28) has an arc-shaped striking path (34a, 34b) for the sensing element.

2. Current collector (2) according to claim 1, wherein one end stop element (27, 28) is provided for both sides of the rocker bar (23) in each case.

3. Current collector (2) according to one of the preceding claims, wherein a sensing element is arranged on both sides of the rocker bar (23) in each case, which restricts the rotary movement of the rocker bar (23) in the clockwise or anticlockwise direction when the associated end stop element (27, 28) is touched.

4. Current collector (2) according to one of the preceding claims, wherein the striking path (34a) is embodied as circular, at least in sections, so that in the neutral position of the rocker bar (23) a radial spacing (35) between the sensing element and the striking path (34a) in an assigned setting angle section of the lower arm (5) is constant.

5. Current collector (2) according to one of the preceding claims, wherein the striking path (34b) is embodied as helical, at least in sections, so that in the neutral position of the rocker bar (23) the radial spacing (35) between the sensing element and the striking path (34b) in an assigned setting angle section of the lower arm (5) varies as a function of the setting angle.

6. Current collector (2) according to one of the preceding claims, wherein a sensing element is embodied as a sensing roller (30, 31) that is mounted on the rocker bar (2) such that it can rotate about the bar longitudinal axis (32) thereof.

7. Non-track-bound, electrically driven vehicle (1) with a current collector according to one of the preceding claims.

## Revendications

1. Appareil (2) de prise de courant d'un véhicule (1), non guidé et à entraînement électrique, pour l'injection d'énergie électrique, à partir d'une installation à ligne de contact bipolaire, ayant deux fils (3, 4) de contact, comprenant
- un bras (5) inférieur, qui peut être monté et qui est, par une articulation (6) de base, relié au véhicule (1), avec possibilité de tourner,
- deux bras (7, 10) supérieurs, qui sont reliés, avec possibilité de tourner au bras (5) inférieur par respectivement une genouillère (8, 11) et qui portent chacun un archet (9, 12) de contact pour la mise en contact de respectivement l'un des fils (3, 4) de contact,
- deux barres (16, 18) d'accouplement, qui sont reliées, avec possibilité de tourner, à respectivement l'un des bras (7, 10) supérieur par respectivement une articulation (17, 19) d'accouplement et qui sont articulées de manière à ce qu'un montage du bras (5) inférieur emporte un montage des bras (7, 10) supérieurs, et
- une bascule (20) de compensation, pour la compensation d'une différence de niveau entre les archets (9, 12) de contact, qui a un couteau (21) et un fléau (23) relié à celui-ci, avec possibilité de tourner, par une articulation (22) de bascule,
- dans lequel le couteau (21) peut être relié, avec possibilité de tourner, au véhicule (1) par une articulation (24) de base, et le fléau (23) est relié respectivement, avec possibilité de tourner, aux barres (16, 18) d'accouplement, par des articulations (25, 26) de compensation montées de part et d'autre de l'articulation (22) de bascule,
**caractérisé par**
- au moins un élément (27, 28) de butée, pouvant être relié au véhicule (1), pour un élément palpeur monté d'un côté du fléau (23), pour la limitation d'un mouvement de rotation du fléau (23) autour d'un axe (29) de l'articulation (22) de bascule,
- dans lequel l'élément palpeur balaie, lors du montage du bras (5) inférieur, un chemin en forme d'arc de cercle, et
- dans lequel l'élément (27, 28) de butée a un chemin (34a, 34b) arqué de butée pour l'élément palpeur.

2. Appareil (2) de prise de courant suivant la revendication 1, dans lequel il est prévu respectivement un élément (27, 28) de butée pour les deux côtés du fléau (23).

3. Appareil (2) de prise de courant suivant l'une des revendications précédentes, dans lequel il est monté, des deux côtés du fléau (23), un élément palpeur, qui, au toucher de l'élément (27, 28) de butée associé, limite le mouvement de rotation du fléau (23) dans le sens des aiguilles d'une montre et respectivement dans le sens contraire au sens des aiguilles d'une montre.

4. Appareil (2) de prise de courant suivant l'une des revendications précédentes, dans lequel le chemin (34a) de butée est, au moins par endroits, circulaire de manière à ce que, en une position neutre du fléau (23), une distance (35) radiale de l'élément palpeur au chemin (34a) de butée soit constante dans une partie angulaire de montage associée du bras (5) inférieur.

5. Appareil (2) de prise de courant suivant l'une des revendications précédentes, dans lequel le chemin (34b) de butée est, au moins par endroits, en forme de spirale, de sorte que, dans la position neutre du fléau (23), la distance (35) radiale de l'élément palpeur au chemin (34b) de butée varie dans une partie angulaire de montage associée du bras (5) inférieur en fonction de l'angle de montage.

6. Appareil (2) de prise de courant suivant l'une des revendications précédentes, dans lequel un élément palpeur est sous la forme d'un rouleau (30, 31) palpeur, qui est monté sur le fléau (32) avec possibilité de tourner autour de l'axe (2) longitudinal du fléau.

7. Véhicule (1) non guidé et à entraînement électrique, comprenant un appareil de prise de courant suivant l'une des revendications précédentes.
